# EUROPÄISCHE PATENTSCHRIFT

(11) **EP 2 401 485 B1**
(45) Veröffentlichungstag und Bekanntmachung des Hinweises auf die Patenterteilung: **28.11.2018**
(21) Anmeldenummer: 10704544.5
(22) Anmeldetag: 10.02.2010
(51) Int. Cl.: F01N 3/20, F01N 11/00, F01N 3/10, F01N 13/00

(54) **VERFAHREN ZUM BETRIEB EINES ABGASSYSTEMS**
METHOD FOR OPERATING AN EXHAUST GAS SYSTEM
PROCEDE POUR FAIRE FONCTIONNER UN SYSTEME D'ECHAPPEMENT

(30) Priorität: 25.02.2009 DE 102009010517
(43) Veröffentlichungstag der Anmeldung: 04.01.2012
(73) Patentinhaber: Continental Automotive GmbH, 30165 Hannover (DE)
(72) Erfinder: MAUS, Wolfgang, 51429 Bergisch Gladbach (DE); BRÜCK, Rolf, 51429 Bergisch Gladbach (DE)
(86) Internationale Anmeldenummer: PCT/EP2010/051664
(87) Internationale Veröffentlichungsnummer: WO 2010/097292

(56) Entgegenhaltungen:
- EP-A1- 1 136 671
- EP-A1- 1 712 764
- WO-A2-2008/002907

## Beschreibung

Die Erfindung betrifft ein Verfahren zum Betrieb eines Abgassystems aufweisend mindestens einen Oxidationskatalysator und mindestens eine für eine selektiv katalytische Reduktion geeignete Anordnung.

Abgassysteme, welche zusätzlich zu einem Oxidationskatalysator eine für eine selektiv katalytische Reduktion geeignete Anordnung beinhalten, werden insbesondere für Kraftfahrzeuge eingesetzt, welche aufgrund der besonderen Verbrennungsbedingungen in ihren Verbrennungskraftmaschinen einen besonders hohen Ausstoß an Stickstoffoxidverbindungen aufweisen. Typischerweise handelt es sich hier um Kraftfahrzeuge, deren Verbrennungskraftmaschinen mager betrieben werden. Bei solchen Verbrennungskraftmaschinen ist der Lambda-Wert größer als 1. Das bedeutet, dass der Brennstoff, welcher der Verbrennungskraftmaschine zugeführt wird, nicht für eine vollständige Umsetzung des Sauerstoffs im Brennraum ausreicht. Solche Verbrennungskraftmaschinen zeichnen sich insbesondere durch Verbrauchsvorteile aus.

Abgasreinigungsanordnungen, die für eine selektive katalytische Reduktion von Stickoxidverbindungen geeignet sind, beinhalten üblicherweise eine in der Abgasleitung vorgesehene Zufuhr für Reduktionsmittel oder Reduktionsmittelvorläufer und einen in Abgasströmungsrichtung abwärts vorgesehenen katalytischen Reaktor. Als Reduktionsmittel wird normalerweise Ammoniak verwendet, welcher aus dem Vorläufer Harnstoff gewonnen wird. Dieser wird dem Abgas als wässrige Lösung oder gegebenenfalls in fester Form zugeführt und durch Hydrolyse und/oder Thermolyse zu Ammoniak umgesetzt. Eine wässrige Harnstofflösung ist beispielsweise unter dem Handelsnamen AdBlue erhältlich. Der katalytische Reaktor (meist ein katalytisch beschichteter Wabenkörper) dient der Umsetzung der Stickstoffoxidverbindungen (NOₓ) im Abgas mit dem Reduktionsmittel zu unschädlichen Substanzen. Normalerweise entstehen bei der selektiv katalytischen Reduktion als Produkte Stickstoff, Sauerstoff und Wasser.

Abgassysteme, welche eine solche Anordnung zur selektiv katalytischen Reduktion aufweisen, beinhalten häufig zusätzlich einen Oxidationskatalysator, welcher für die Reduktion von anderen im Abgas enthaltenen Schadstoffen, wie z. B. Kohlenwasserstoff (HC) bzw. Rußpartikel (C) und/oder Kohlenmonoxid (CO), geeignet ist. Häufig ist dieser Oxidationskatalysator in Abgasströmungsrichtung vor der Anordnung zur selektiv katalytischen Reduktion, bzw. vor der Reduktionsmittelzufuhr, angeordnet. In dieser Position kann der Oxidationskatalysator dazu genutzt werden, die Abgase der Verbrennungskraftmaschine für die stromabwärts erfolgende Behandlung in der Anordnung zur selektiv katalytisch Reduktion vorzubereiten. Dazu wandelt er z. B. im Abgas enthaltendes Stickstoffoxid (NO) in Stickstoffdioxid (NO₂) um. Zusätzlich werden hier auch unverbrannte Kohlenstoffverbindungen (C) oxidiert.

Derartige Abgassysteme sind im Lastkraftwagenbereich seit einiger Zeit im breiten Einsatz, weil Lastkraftwagen typischerweise mit mager betriebenen Verbrennungskraftmaschinen angetrieben werden. Im Zuge zukünftiger Abgasnormen werden solche Abgassysteme allerdings auch im Personenkraftwagenbereich immer wichtiger werden.

Es ist üblich, als Eingangsgrößen für die Motorsteuerung Betriebsparameter des Abgassystems zu ermitteln. Dies geschieht regelmäßig mit Hilfe von im Abgassystem platzierten Messsonden. Die Einspritzung von Kraftstoff in die Verbrennungskraftmaschine, die Luftzufuhr und ggf. der Zündzeitpunkt des Gemisches in der Verbrennungskraftmaschine können dann auch auf die Bedingungen im Abgassystem abgestimmt werden, wodurch die Arbeitsweise des Abgassystems angepasst und der Schadstoffausstoß weiter reduziert wird. Derartige Messsonden im Abgassystem sind gelegentlich Fehlerquellen, weil die von ihnen gelieferten Messwerte beispielsweise bei Verschmutzung der Messsonde ungenau sind und nicht entsprechend interpretiert werden können. Aus diesem Grunde müssen Messsonden in Abgassystemen regelmäßig geprüft oder überwacht werden. Gleichzeitig stellen derartige Messsonden, insbesondere Gas-Messsonden, bei der Produktion von Abgassystemen einen erheblichen Kostenfaktor dar. Aus diesem Grunde ist es wünschenswert, in einem Abgassystem möglichst wenig Messsonden zur Aufnahme von Betriebsparametern vorzusehen und gleichzeitig alle relevanten Informationen über den Zustand des Abgassystems zur Verfügung stellen zu können. Darüber hinaus sind die derzeit aus dem Stand der Technik bekannten Möglichkeiten, den Zustand eines Oxidationskatalysators in einem Abgassystem zu ermitteln, unzureichend bzw. zu ungenau.

Die WO-A2-2008/002907 betrifft ein Abgasbehandlungssystem für eine Dieselverbrennungskraftmaschine und insbesondere die indirekte Überwachung der Funktion eines Katalysators in einem Abgasbehandlungssystem. Bei diesem Abgasbehandlungssystem wird ein Absinken der Effektivität der Kohlenstoffkonvertierung indirekt über eine Messung des Abbaus der Sauerstoffspeicherfähigkeit bestimmt.

Ausgehend hiervon ist es Aufgabe der hier vorliegenden Erfindung, die mit Bezug auf den Stand der Technik aufgezeigten Probleme zumindest teilweise zu lösen und insbesondere ein Verfahren zum Betrieb eines Abgassystems mit einer Anordnung für die selektiv katalytische Reduktion und einem Oxidationskatalysator anzugeben, bei dem die für die Regelung des Abgassystems notwendigen Parameter, insbesondere Parameter zur Diagnose des Oxidationskatalysators ermittelt werden können und gleichzeitig eine minimale Anzahl an Messsonden erforderlich ist. Darüber hinaus sollen ein Abgassystem zur Durchführung des erfindungsgemäßen Verfahrens und ein entsprechend ausgerüstetes Fahrzeug angegeben werden.

Diese Aufgaben werden gelöst durch ein Verfahren gemäß den Merkmalen des Patentanspruchs 1, ein Abgassystem gemäß den Merkmalen des Patentanspruchs 8 und ein Fahrzeug gemäß den Merkmalen des Patentanspruchs 9. Vorteilhafte Weiterbildungen sind jeweils Gegenstand der abhängigen Patentansprüche. Die Beschreibung, insbesondere im Zusammenhang mit den Figuren, gibt weitere Ausführungsbeispiele an. Alle angegebenen Merkmale können in technologisch sinnvoller Weise beliebig miteinander kombiniert werden.

Das erfindungsgemäße Verfahren zum Betrieb eines Abgassystems einer mobilen Verbrennungskraftmaschine, aufweisend mindestens einen Oxidationskatalysator zur Umwandlung von Stickstoffmonoxid (NO) zu Stickstoffidoxid (NO₂) mit einer Umsetzungseffektivität und mindestens eine für eine selektiv katalytische Reduktion geeignete Anordnung mit mindestens einer Messsonde zur Bestimmung der Effektivität der Anordnung bei der selektiven katalytischen Reduktion umfasst zumindest folgende Schritte:
a) Bestimmen einer Umsetzungseffektivität der Anordnung mit Hilfe der mindestens einen Messsonde und
b) Berechnen einer Effektivität der Stickstoffmonoxidumsetzung im Oxidationskatalysator aus der bestimmten Umsetzungseffektivität, wobei ein in einer Auswertschaltung hinterlegtes Kennlinienfeld verwendet wird.

Die Umsetzungseffektivität einer Anordnung zur selektiv katalytischen Reduktion, im Folgenden auch SCR-Anordnung genannt, hängt stark von dem Verhältnis von Stickstoffdioxid zu Stickstoffmonoxid in dem Abgas ab, welches in der Anordnung gereinigt werden soll. Dieses Verhältnis wird maßgeblich durch den Oxidationskatalysator bestimmt, welcher in Strömungsrichtung vor der SCR-Anordnung angeordnet ist. Dieser Oxidationskatalysator setzt Stickstoffmonoxid zu Stickstoffdioxid um. Insbesondere, wenn nun weitere Faktoren, die die Umsetzungseffektivität der SCR-Anordnung beeinflussen, bekannt sind oder einen derart geringen Einfluss aufweisen, dass dieser vernachlässigt werden können, kann aus der Umsetzungseffektivität der SCR Anordnung sehr zuverlässig und genau die Effektivität der Umsetzung von Stickstoffmonoxid zu Stickstoffdioxid im Oxidationskatalysator berechnet werden. Die Informationen über die Effektivität der Stickstoffmonoxidumsetzung des Oxidationskatalysators werden also ohne eine dem Oxidationskatalysator zugeordnete Messsonde gewonnen. Mit Stickstoffmonoxidumsetzung ist hier insbesondere die Umsetzung von Stickstoffmonoxid zu Stickstoffdioxid gemeint.

Mit dem Begriff "Messsonden" sind hier insbesondere Gassonden gemeint. Messsonden zur Messung der Umsetzungseffektivität der SCR-Anordnung sind regelmäßig so genannte NOx-Sensoren. Diese sind teilweise auch geeignet, einen Lambda-Wert zu bestimmen. Es werden typischerweise Planarsonden, Widerstandssprungsonden und/oder Breitbandsonden eingesetzt. Im Abgassystem für das erfindungsgemäße Verfahren sind bevorzugt keine dem Oxidationskatalysator zugeordneten Messsonden vorgesehen. Insbesondere ist nur ein NOx-Sensor nach der SCR-Anordnung vorgesehen. Sensoren zur Bestimmung von anderen Parametern, wie Druck, Temperatur und/oder Volumenstrom können optional sowohl der SCR-Anordnung als auch dem Oxidationskatalysator zugeordnet vorgesehen sein.

Die Informationen über die Effektivität des Oxidationskatalysators können beispielsweise zur Regelung eines im Abgassystem vorgesehenen Heizelementes zur Regelung der Verbrennungskraftmaschine und/oder zur Überprüfung einer Regenerationsbedürftigkeit des Oxidationskatalysators verwendet werden. Bei einer Verbrennungskraftmaschine lassen sich beispielsweise die Kraftstoff- bzw. Sauerstoffzufuhr und/oder ggf. der Zündzeitpunkt unter Berücksichtigung der ermittelten Informationen anpassen.

Die Bestimmung der Umsetzungseffektivität der SCR-Anordnung kann beispielsweise auch mit zwei Messsonden erfolgen, wobei eine in Strömungsrichtung des Abgases zu Beginn und eine am Ende der SCR-Anordnung im Abgassystem platziert ist und die Veränderung des Anteils an Stickoxidverbindungen im Abgas über eine Differenzmessung des Gehaltes an Stickstoffoxidverbindungen vor und nach der selektiv katalytischen Reduktion ermittelt wird.

Bei dem erfindungsgemäßen Verfahren zum Betrieb eines Abgassystems wird zur Durchführung von Schritt b) ein in einer Auswertschaltung hinterlegtes Kennlinienfeld verwendet.

Neben der Umsetzungseffektivität im Oxidationskatalysator haben ggf. auch noch weitere Parameter Einfluss auf die Umsetzungseffektivität der SCR-Anordnung. Mögliche Parameter können in einem Versuchsaufbau, in welchem die Umsetzungseffektivität im Oxidationskatalysator gemessen und nicht berechnet wird, ermittelt und als Kennlinienfeld gespeichert werden. Aus einem solchen empirisch ermittelten Kennlinienfeld können bei in der Serienfertigung hergestellten Abgassystemen dann die im Versuchsaufbau gemessenen Umsetzungseffektivitäten im Oxidationskatalysator einfach und zuverlässig berechnet bzw. rekonstruiert werden.

Besonders vorteilhaft ist das erfindungsgemäße Verfahren, wenn nach Schritt b) eine Berechnung der Umsetzungseffektivität des Oxidationskatalysators für Kohlenwasserstoffe und/oder für Kohlenmonoxid aus der Effektivität der Stickstoffmonoxid-Umsetzung erfolgt. Zwischen den Umsetzungseffektivitäten eines Oxidationskatalysators für die drei wichtigsten Schadstoffarten (Stickstoffoxidverbindungen, Kohlenwasserstoffe und Kohlenmonoxid) besteht ein Zusammenhang. Wenn eine dieser Umsetzungseffektivitäten bekannt ist, können darüber Rückschlüsse auf die anderen beiden Umsetzungseffektivitäten gezogen werden. Auch hier eignet sich ein Kennlinienfeld, in dem empirisch ermittelte Zusammenhänge hinterlegt sind.

In einer Weiterbildung des erfindungsgemäßen Verfahrens wird im Abgassystem mindestens eine Raumgeschwindigkeit und/oder ein Volumenstrom des Abgases gemessen und in die Berechnung der Effektivität der Stickstoffmonoxidumsetzung im Oxidationskatalysator mit einbezogen.

Neben der Umsetzungseffektivität im Oxidationskatalysator ist die Raumgeschwindigkeit des Abgases bzw. der Volumenstrom der Abgase durch das Abgassystem eine weitere wichtige Einflussgröße auf die Umsetzungseffektivität der SCR-Anordnung. Es ist deshalb vorteilhaft, eine aktuelle Raumgeschwindigkeit und/oder einen Volumenstrom des Abgases zusätzlich in die Berechnung der Effektivität der Stickstoffmonoxidumsetzung im Oxidationskatalysator mit einzubeziehen. Volumenstrom und/oder Raumgeschwindigkeit können gegebenenfalls im Kennlinienfeld als Einflussparameter mit hinterlegt sein.

Weiterhin vorteilhaft ist es, wenn im Abgassystem mindestens eine Temperatur des Abgases gemessen wird und in die Berechnung der Effektivität der Stickstoffmonoxidumsetzung im Oxidationskatalysator mit einbezogen wird. Auch die Temperatur der Abgase ist ein wichtiger Einflussparameter auf die Umsetzungseffektivität in der SCR-Anordnung und es kann sinnvoll sein, sie in einem Kennlinienfeld mit zu berücksichtigen. Die Temperatur kann beispielsweise in und/oder am SCR-Katalysator oder in und/oder an einer Abgasleitung in der SCR-Anordnung gemessen werden.

Die Abhängigkeit der Umsetzungseffektivität einer SCR-Anordnung von dem Verhältnis von Stickstoffdioxid zu Stickstoffmonoxid ist besonders stark bei niedrigen Abgastemperaturen, insbesondere im Bereich von 150 °C bis 300 °C, gegeben. Das erfindungsgemäße Verfahren kann deswegen insbesondere dann verwendet werden, wenn eine Temperatur des Abgases zwischen 150 °C und 300 °C vorliegt. Die Temperatur kann beispielsweise in der SCR-Anordnung gemessen werden. In diesem Temperaturbereich liefert das erfindungsgemäße Verfahren besonders genaue Ergebnisse.

Darüber hinaus kann es vorteilhaft sein, im erfindungsgemäßen Verfahren eine dem Abgas zugeführte Menge Reduktionsmittel oder Reduktionsmittelvorläufer zu ermitteln (berechnen und/oder messen) und in die Berechnung der Effektivität der Stickstoffmonoxidumsetzung im Oxidationskatalysator mit einzubeziehen. Gegebenenfalls kann auch statt einer Messung der zugeführten Reduktionsmittelmenge eine regelmäßige

Überprüfung des Füllstandes eines Reduktionsmittelbehälters und/oder eines Tanks für Reduktionsmittelvorläufer erfolgen.

Im Rahmen der Erfindung wird auch ein Abgassystem für eine mobile Verbrennungskraftmaschine, aufweisend mindestens einen Oxidationskatalysator und mindestens eine für eine selektiv katalytische Reduktion geeignete Anordnung mit mindestens einer Messsonde zur Bestimmung der Effektivität der Anordnung und einer Auswertschaltung vorgeschlagen, die zur Durchführung des erfindungsgemäßen Verfahrens eingerichtet ist.

Die Auswertschaltung kann typischerweise als integrierte Schaltung ausgeführt sein, in welcher das Kennlinienfeld hinterlegt sein kann. Eine derartige Auswertschaltung kann sehr einfach an verschiedene Abgassysteme angepasst werden.

Zusätzlich wird im Rahmen der Erfindung auch ein Fahrzeug mit einer mobilen Verbrennungskraftmaschine aufweisend mindestens ein erfindungsgemäßes Abgassystem zur Durchführung des erfindungsgemäßen Verfahrens vorgeschlagen.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, auf die diese jedoch nicht beschränkt ist. Insbesondere ist darauf hinzuweisen, dass die Figuren und insbesondere die dargestellten Größenverhältnisse nur schematisch sind. Es zeigen:
- Fig. 1:: ein Kraftfahrzeug mit einer Ausführungsvariante der erfindungsgemäßen Abgasanlage, und
- Fig. 2:: ein Beispiel eines Kennlinienfeldes zur Ermittlung der Stickstoffmonoxidumsetzung im Oxidationskatalysator.

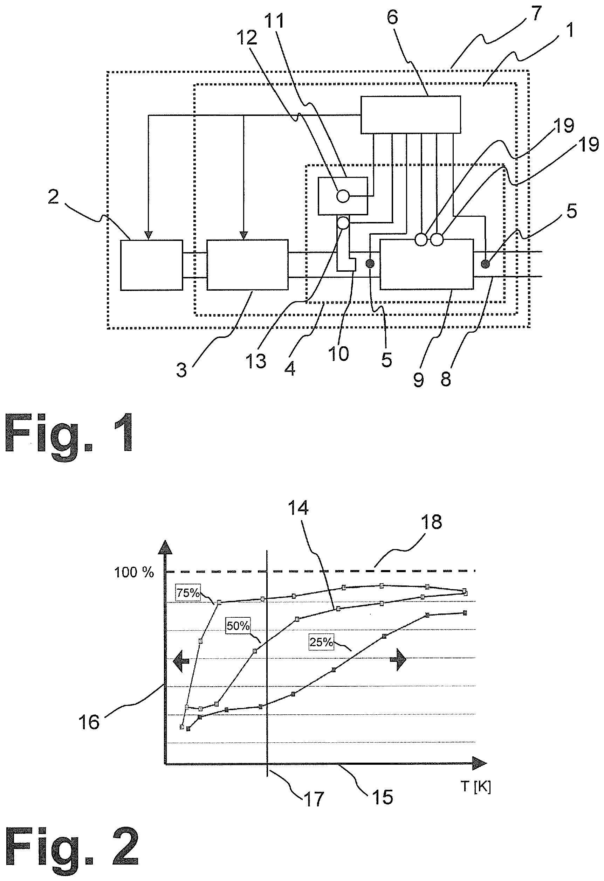

In Fig. 1 ist ein Kraftfahrzeug 7 dargestellt. Das Kraftfahrzeug 7 weist eine Verbrennungskraftmaschine 2 und ein erfindungsgemäßes Abgassystem 1 auf. Das Abgassystem 1 umfasst einen Oxidationskatalysator 3 und eine Anordnung 4, welche für eine selektiv katalytische Reduktion der Abgasbestandteile geeignet ist. Die Anordnung 4 beinhaltet eine Zufuhr 10 für Reduktionsmittel oder Reduktionsmittelvorläufer, einen Tank 11 für Reduktionsmittel oder Reduktionsmittelvorläufer, einen SCR-Katalysator 9 sowie eine Messsonde 5 nach Art eines NOx-Sensors, nachgeschaltet dem SCR-Katalysator 9. Die Verbrennungskraftmaschine 2, der Oxidationskatalysator 3, das Zufuhrsystem 10 und der SCR-Katalysator 9 sind in Strömungsrichtung des Abgases hintereinander entlang einer Abgasleitung 8 angeordnet. Zusätzlich kann nun optional eine weitere Messsonde 5, dem SCR-Katalysator vorgeschaltet, vorgesehen sein. Außerdem sind gegebenenfalls Sensoren 19 vorgesehen, welche zur Aufnahme von verschiedenen Betriebsparametern der Anordnung 4 geeignet sind. Bspw. können Temperaturen, Drücke und/oder Volumenströme mit den Sensoren 19 ermittelt werden. Die Sensoren 19 können an unterschiedlichen Komponenten der Anordnung 4 bzw. des Abgassystems 1 platziert sein. Der Tank 11 weist einen Füllstandssensor 12 auf, um den Füllstand des Tankes 11 zu ermitteln. Zusätzlich ist ein Durchflusssensor 13 vorgesehen, welcher die Reduktionsmittelmenge ermittelt, die der Anordnung 4 zugeführt wird. Die mit Hilfe der Messsonden 5, der Sensoren 19, dem Füllstandssensor 12 und dem Durchflusssensor 13 ermittelten Betriebsparameter werden zu einer Auswertschaltung 6 übermittelt. Diese berechnet aus den ermittelten Betriebsparametern über den Zwischenschritt der Umsetzungseffektivität der Anordnung 4 die Umsetzungseffektivität des Oxidationskatalysators 3. Die ausgegebene Umsetzungseffektivität des Oxidationskatalysators 3 ist in der Fig. 1 als Pfeil dargestellt und kann innerhalb des Abgassystems 1 zur Einstellung des Abgassystems 1 und/oder zur Einstellung von weiteren Betriebsparametern des Kraftfahrzeugs 7 verwendet werden.

In der Fig. 2 ist rein schematisch und stark vereinfacht ein Kennlinienfeld 18 dargestellt, welches zur Berechnung der Effektivität der Stickstoffmonoxidumsetzung des Oxidationskatalysators verwendet werden kann. Auf der horizontalen Achse 15 ist eine Temperatur (T) der SCR-Anordnung aufgetragen. Auf der vertikalen Achse 16 ist die Umsetzungseffektivität der SCR-Anordnung aufgetragen. Die Kennlinie 14 stellt den Zusammenhang zwischen Temperatur und Umsetzungseffektivität der SCR-Anordnung her, wenn alle anderen Einflussparameter konstant gehalten werden. Die weiteren Kennlinien 14 im Kennlinienfeld 18 zeigen wie sich die Kennlinie 14 verschiebt, wenn Einflussparameter variiert werden. Neben dem Abgasvolumenstrom und der Reduktionsmittelzufuhrrate ist die Effektivität der Stickstoffmonoxidumsetzung des Oxidationskatalysators, welcher der SCR-Anordnung vorgeordnet ist (siehe Fig. 1), einer dieser Parameter. Ist der Oxidationskatalysator besonders effektiv und wird viel Stickstoffoxid zu Stickstoffdioxid umgesetzt, verschiebt sich die Kennlinie typischerweise nach links hin zu niedrigen Temperaturen. Ist der Oxidationskatalysator weniger effektiv, verschiebt sich die Kennlinie hin zu höheren Temperaturen nach rechts. Wenn nun mit Hilfe eines Temperatursensors eine gemessene Temperatur 17 in der SCR-Anordnung ermittelt wird, kann über die Umsetzungseffektivität der SCR-Anordnung auf der vertikalen Achse 16 ermittelt werden, welche Kennlinie 14 des Kennlinienfeldes 18 relevant ist. Da jede Kennlinie einer bestimmten Effektivität der Umsetzung von Stickstoffmonoxid zu Stickstoffdioxid im Oxidationskatalysator entspricht, kann die Effektivität der Umsetzung von Stickstoffmonoxid zu Stickstoffdioxid im Oxidationskatalysator so bestimmt werden. Weitere Einflussgrößen, wie der Abgasvolumenstrom und/oder die zugeführte Reduktionsmittelmenge, bedingen ebenfalls eine Verschiebung oder gegebenenfalls auch eine Verformung der Kennlinien 14 im Kennlinienfeld 18. Das in der Auswertschaltung hinterlegte Kennlinienfeld 18 kann somit in der Praxis viele Einflussgrößen zusätzlich berücksichtigen und folglich eine erhebliche Komplexität aufweisen, es ist jedoch in einem Versuchsaufbau empirisch ermittelbar.

Mit Hilfe des erfindungsgemäßen Verfahrens kann ohne zusätzliche Messsonden im oder am Oxidationskatalysator eine Einschätzung der Effektivität der Stickstoffmonoxidumsetzung zu Stickstoffdioxid eines Oxidationskatalysators im Abgassystem gewonnen werden. Dies verringert die Wartungshäufigkeit des Abgassystems und ermöglicht gleichzeitig die präzise Regelung der Abgasumsetzung insgesamt.

### Bezugszeichenliste

- 1: Abgassystem
- 2: Verbrennungskraftmaschine
- 3: Oxidationskatalysator
- 4: Anordnung
- 5: Messsonde
- 6: Auswertungsschaltung
- 7: Kraftfahrzeug
- 8: Abgasleitung
- 9: SCR-Katalysator
- 10: Zufuhr
- 11: Tank
- 12: Füllstandssensor
- 13: Durchflusssensor
- 14: Kennlinie
- 15: horizontale Achse
- 16: vertikale Achse
- 17: gemessene Temperatur
- 18: Kennlinienfeld
- 19: Sensor

## Patentansprüche

1. Verfahren zum Betrieb eines Abgassystems (1) einer mobilen Verbrennungskraftmaschine (2), aufweisend mindestens einen Oxidationskatalysator (3) zur Umwandlung von Stickstoffmonoxid (NO) zu Stickstoffdioxid (NO₂) mit einer Umsetzungseffektivität und mindestens eine für eine selektiv katalytische Reduktion geeignete Anordnung (4) mit mindestens einer Messsonde (5) zur Bestimmung der Effektivität der Anordnung (4) bei der selektiven katalytischen Reduktion, welches zumindest folgende Schritte umfasst:
a) Bestimmen einer Umsetzungseffektivität der Anordnung (4) mit Hilfe der mindestens einen Messsonde (5) und
b) Berechnen einer Effektivität der Stickstoffmonoxidumsetzung im Oxidationskatalysator (3) aus der bestimmten Umsetzungseffektivität,wobei ein in einerAuswertschaltung (6) hinterlegtes Kennlinienfeld verwendet wird.

2. Verfahren zum Betrieb eines Abgassystems (1) nach einem der vorhergehenden Patentansprüche, wobei nach Schritt b) eine Berechnung der Umsetzungseffektivität des Oxidationskatalysators (3) für Kohlenwasserstoffe und/oder für Kohlenmonoxid aus der Effektivität der Stickstoffmonoxidumsetzung erfolgt.

3. Verfahren zum Betrieb eines Abgassystems (1) nach einem der vorhergehenden Patentansprüche, wobei im Abgassystem (1) mindestens eine Raumgeschwindigkeit und/oder ein Volumenstrom des Abgases gemessen und in die Berechnung der Effektivität der Stickstoffmonoxidumsetzung im Oxidationskatalysator (3) mit einbezogen wird.

4. Verfahren zum Betrieb eines Abgassystems (1) nach einem der vorhergehenden Patentansprüche, wobei im Abgassystem (1) mindestens eine Temperatur der Abgase gemessen und in die Berechnung der Effektivität der Stickstoffmonoxidumsetzung im Oxidationskatalysator (3) mit einbezogen wird.

5. Verfahren zum Betrieb eines Abgassystems (1) nach einem der vorhergehenden Patentansprüche, wobei eine dem Abgas zugeführte Menge Reduktionsmittel oder Reduktionsmittelvorläufer ermittelt und in die Berechnung der Effektivität der Stickstoffmonoxidumsetzung im Oxidationskatalysator (3) mit einbezogen wird.

6. Abgassystem (1) für eine mobile Verbrennungskraftmaschine (2), aufweisend mindestens einen Oxidationskatalysator (3) und mindestens eine für eine selektiv katalytische Reduktion geeignete Anordnung (4) mit mindestens einer Messsonde (5) zur Bestimmung der Effektivität der Anordnung (4) und einer Auswertungsschaltung (6), die zur Durchführung eines Verfahrens nach einem der Patentansprüche 1 bis 5 eingerichtet ist.

7. Fahrzeug (7) mit einer mobilen Verbrennungskraftmaschine (2), aufweisend ein Abgassystem (1) nach Patentanspruch 6.

## Claims

1. Method for operating an exhaust system (1) of a mobile internal combustion engine (2) having at least one oxidation catalytic converter (3) for converting nitrogen monoxide (NO) to nitrogen dioxide (NO₂) with a conversion effectiveness and at least one arrangement (4) which is suitable for a selective catalytic reduction and which has at least one measurement probe (5) for determining the effectiveness of the arrangement (4) during the selective catalytic reduction, which method comprises at least the following steps:
a) determining a conversion effectiveness of the arrangement (4) by means of the at least one measurement probe (5), and
b) calculating an effectiveness of the nitrogen monoxide conversion in the oxidation catalytic converter (3) from the determined conversion effectiveness, wherein a characteristic map stored in an evaluation circuit (6) is used.

2. Method for operating an exhaust system (1) according to one of the preceding patent claims, wherein after step b), the conversion effectiveness of the oxidation catalytic converter (3) for hydrocarbons and/or for carbon monoxide is calculated from the effectiveness of the nitrogen monoxide conversion.

3. Method for operating an exhaust system (1) according to one of the preceding patent claims, wherein at least one spatial velocity and/or a volume flow of the exhaust gas is measured in the exhaust system (1) and incorporated in the calculation of the effectiveness of the nitrogen monoxide conversion in the oxidation catalytic converter (3).

4. Method for operating an exhaust system (1) according to one of the preceding patent claims, wherein at least one temperature of the exhaust gases is measured in the exhaust system (1) and incorporated in the calculation of the effectiveness of the nitrogen monoxide conversion in the oxidation catalytic converter (3) .

5. Method for operating an exhaust system (1) according to one of the preceding patent claims, wherein an amount of reducing agent or reducing agent precursor supplied to the exhaust gas is determined and incorporated in the calculation of the effectiveness of the nitrogen monoxide conversion in the oxidation catalytic converter (3) .

6. Exhaust system (1) for a mobile internal combustion engine (2), having at least one oxidation catalytic converter (3) and having at least one arrangement (4) which is suitable for a selective catalytic reduction and which has at least one measurement probe (5) for determining the effectiveness of the arrangement (4) and which has an evaluation circuit (6) set up to execute a method according to one of Patent Claims 1 to 5.

7. Vehicle (7) having a mobile internal combustion engine (2), having an exhaust system (1) according to Patent Claim 6.

## Revendications

1. Procédé pour faire fonctionner un système d'échappement (1) d'un moteur à combustion interne mobile (2), présentant au moins un catalyseur d'oxydation (3) pour convertir du monoxyde d'azote (NO) en dioxyde d'azote (NO₂) avec une efficacité de conversion et au moins un agencement (4) approprié pour une réduction catalytique sélective avec au moins une sonde de mesure (5) pour déterminer l'efficacité de l'agencement (4) lors de la réduction catalytique sélective, comprenant au moins les étapes suivantes :
a) détermination d'une efficacité de conversion de l'agencement (4) à l'aide de l'au moins une sonde de mesure (5) et
b) calcul d'une efficacité de conversion du monoxyde d'azote dans le catalyseur d'oxydation (3) à partir de l'efficacité de conversion déterminée, un champ de caractéristiques consigné dans un circuit d'analyse (6) étant utilisé.

2. Procédé pour faire fonctionner un système d'échappement (1) selon l'une quelconque des revendications précédentes, dans lequel, après l'étape b), a lieu un calcul de l'efficacité de conversion du catalyseur d'oxydation (3) pour les hydrocarbures et/ou pour le monoxyde de carbone à partir de l'efficacité de la conversion du monoxyde d'azote.

3. Procédé pour faire fonctionner un système d'échappement (1) selon l'une quelconque des revendications précédentes, dans lequel au moins une vitesse spatiale et/ou au moins un débit volumique de gaz d'échappement sont mesurés dans le système d'échappement (1) et sont pris en compte dans le calcul de l'efficacité de la conversion du monoxyde d'azote dans le catalyseur d'oxydation (3).

4. Procédé pour faire fonctionner un système d'échappement (1) selon l'une quelconque des revendications précédentes, dans lequel au moins une température des gaz d'échappement est mesurée dans le système d'échappement (1) et est prise en compte dans le calcul de l'efficacité de la conversion du monoxyde d'azote dans le catalyseur d'oxydation (3).

5. Procédé pour faire fonctionner un système d'échappement (1) selon l'une quelconque des revendications précédentes, dans lequel une quantité d'agent réducteur ou de précurseur d'agent réducteur acheminé au gaz d'échappement est détectée et est prise en compte dans le calcul de l'efficacité de la conversion de monoxyde d'azote dans le catalyseur d'oxydation (3).

6. Système d'échappement (1) pour un moteur à combustion interne mobile (2), présentant au moins un catalyseur d'oxydation (3) et au moins un agencement (4) approprié pour une réduction catalytique sélective avec au moins une sonde de mesure (5) pour déterminer l'efficacité de l'agencement (4) et un circuit d'analyse (6) qui est prévu pour mettre en oeuvre un procédé selon l'une quelconque des revendications 1 à 5.

7. Véhicule (7) comprenant un moteur à combustion interne mobile (2) présentant un système d'échappement (1) selon la revendication 6.
